# EUROPEAN PATENT APPLICATION

(11) **EP 1 816 028 A2**
(43) Date of publication of application: **08.08.2007**
(21) Application number: 07001825.4
(22) Date of filing: 29.01.2007
(51) Int. Cl.: B60N 3/00, B60R 7/04

(54) **Vehicle seat having a folding shelf**

(30) Priority: 02.02.2006 IT MI20060175
(71) Applicant: Isringhausen S.p.A., 28060 S. Pietro Mosezzo, Frazione di Nibbia (NO) (IT)
(72) Inventor: Tirapelle, Luigi, 10036 Settimo Torinese (TO) (IT); Gaetani, Luca, 00143 Roma (IT)
(74) Representative: Premru, Rok

(57) **Abstract**

A vehicle seat, comprising a seating surface (2), a backrest (3), as well as a folding platform (4) attached to the front or rear part of said backrest (3), said platform (4) being movable between a first position, where said platfonn is received in a hollow (24) formed in said backrest, and a second position, where said platform projects out of said hollow, said platform (4) comprising a support structure and a pair of members (6,6) for connecting said support structure (15) to the hollow of said backrest (3), said connecting members being arranged symmetrically with respect to the longitudinal plane of symmetry of the platform, characterized in that said pair of connecting members comprises two plate-like elements (7,7) integral with said support structure (15), having a slot (8,8) with an extension axis (X), and a generally hook-shaped portion (12,12) which defines a hollow; a transverse rod (9), which fits in said slots and has ends (19,19) projecting out of said slots, said transverse rod (9) being able to slide along the direction of extension of said slots against the action of elastic return means; a pair of brackets (16,16) integral with said backrest, which support pivot pins (17,17) fitting in said hollows (13,13) and cams (18,18) which interfere with said ends of said transverse rod, said cams having two recesses (81,82), corresponding to said first and second positions of said platform (9) and adapted to receive said ends (19,19) of said transverse rod.

## Description

A seat for vehicles, particularly commercial motor vehicles, is herein disclosed having a folding shelf attached to the front or the rear part of a vehicle seat backrest, which is movable between a first operating position, where it folds into the backrest, and a second operating position, where this platform projects out of the backrest.

In seats for vehicles, particularly commercial motor vehicles, a folding platform is known to be used for various objects to be placed thereon.

This platform typically collapses into a hollow formed in a backrest and is hinged thereto.

These platforms preferably have a supporting surface that is conformed to hold objects typically used while traveling, such as glasses, cans, notepads, diaries, etc.

A seat having a folding platform is disclosed in patent application MI 2001 A 000574 by the applicant hereof.

Nevertheless, prior art seats with folding platforms still suffer from certain drawbacks.

For example, they may not be easily mounted to the seat.

Also, in case of head-on crash, the platforms tend to unfold.

Furthermore, prior art platforms generate noise both in operation, and in idle deployed and folded positions, due to vibratory stresses.

The vehicle seat with folding shelf disclosed hereinafter has the object to obviate at least some of prior art problems and particularly those set out hereinbefore.

A possible embodiment of a shelf and a seat with a shelf as defined in the attached claims, will be described hereafter with reference to the accompanying drawings, where:

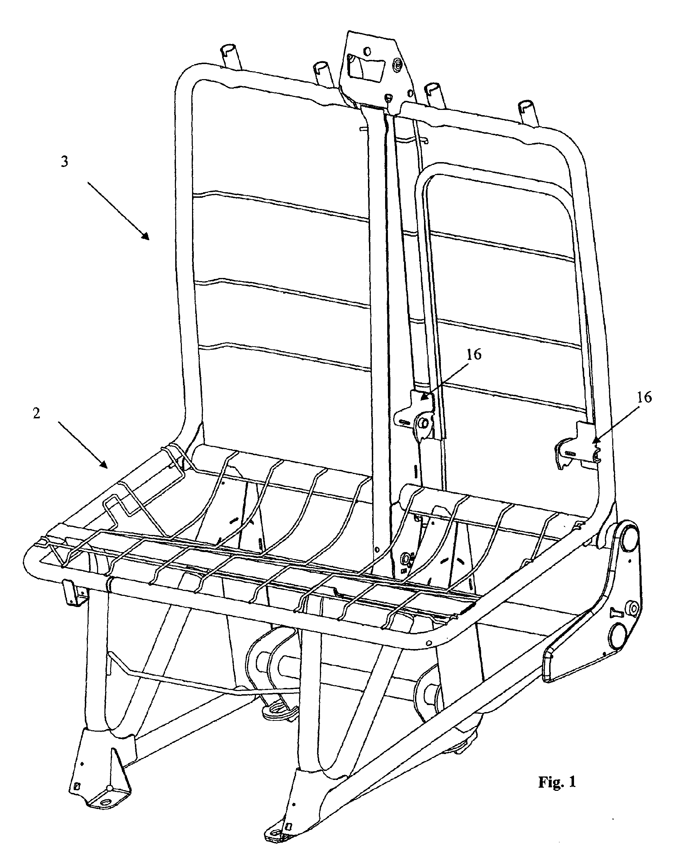

- Fig. 1 shows the structure of the seat on which a platform is mounted;

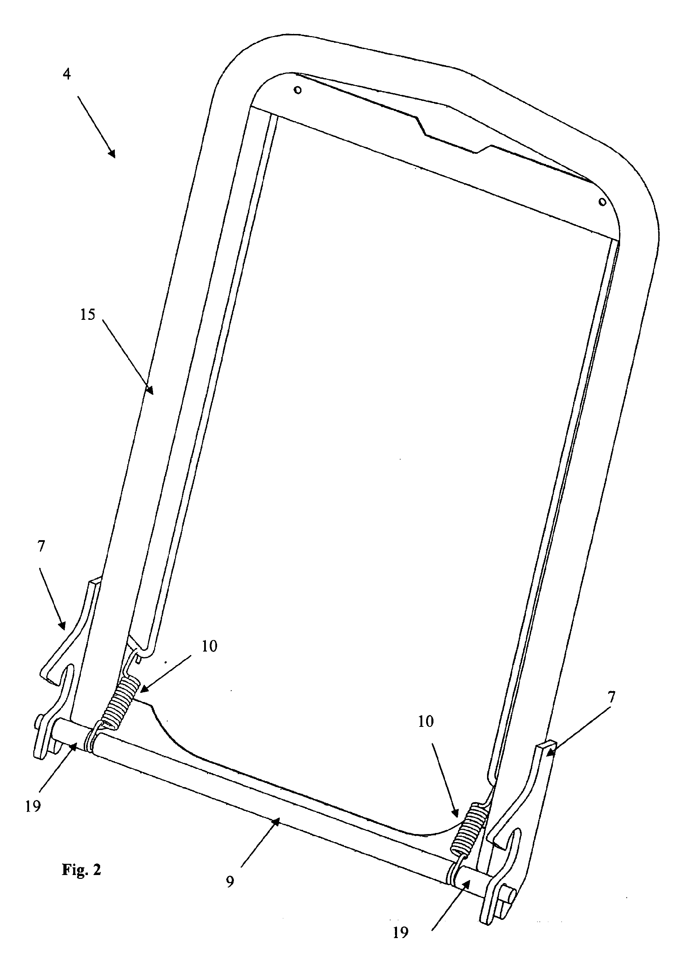

- Fig. 2 shows the structure of a platform;

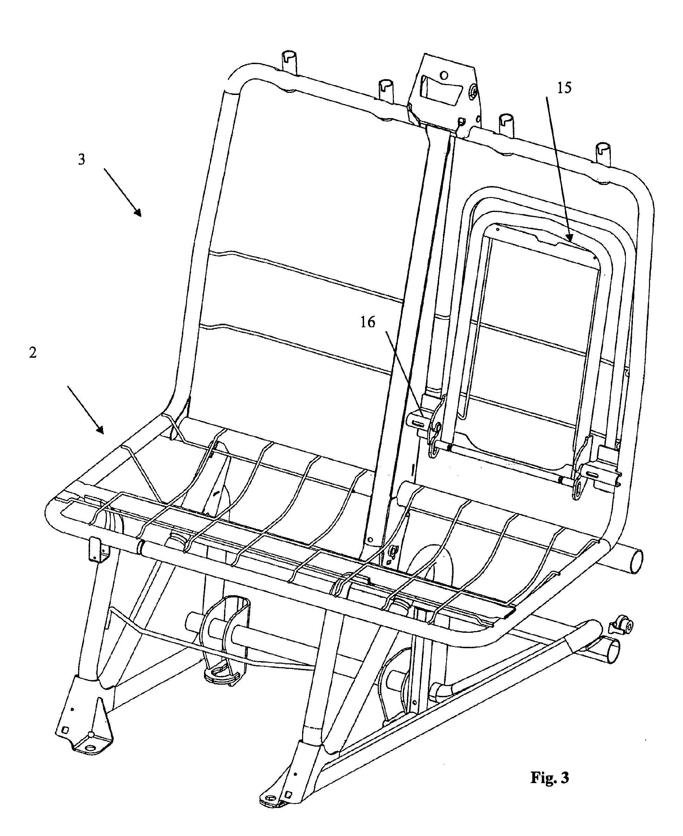

- Fig. 3 shows the assembly of the seat structure of Fig. 1 and the platform structure;

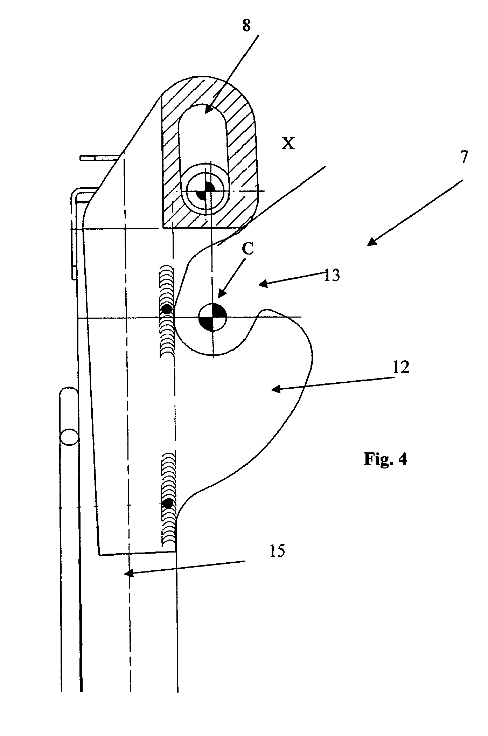

- Fig. 4 is an enlarged view of a detail of the platform;

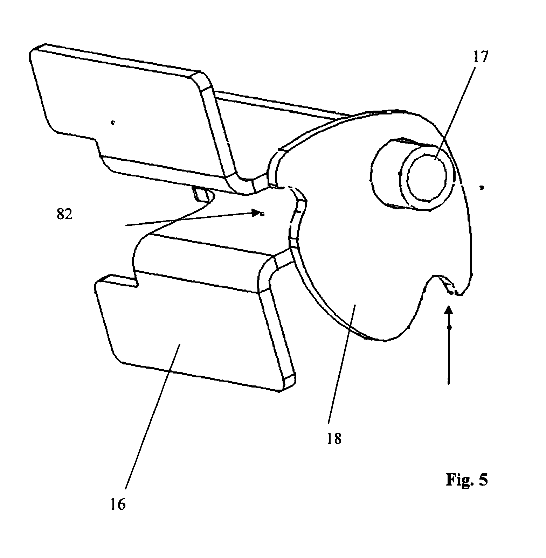

- Fig. 5 is an enlarged view of a detail ofthe system for securing the platform to the backrest;
- Fig. 6 to Fig. 13 show a sequence of operations for mounting a platform to the backrest of a seat.

Referring to the accompanying drawings, a vehicle seat is shown, which comprises a seating surface 2, a backrest 3 and a folding platform 4 attached to the front part 5 ofthe backrest 3.

The platform 4 is capable of pivoting (with an angle of at least 90°) between a first operating position, where it is received in a hollow 24 formed in the front part ofthe backrest 3, and a second operating position, where the platform 4 projects out of the hollow 24 with a substantially and/or generally horizontal orientation.

This embodiment allows the platform to be used by the vehicle driver.

In an alternative, not shown embodiment, which is designed to be used by a passenger seated in the rear row, the hollow 24 is formed in the rear part of the backrest.

The platform 4 is pivotally connected to the backrest 3 by connection members - better described below - which allow particularly easy mounting of the platform 4 to the seat backrest 3, without using any tool.

A pair of brackets 16, 16 are housed in the recess 24 of the backrest 3, in symmetrical positions with respect to a longitudinal plane, and support aligned fixed pivot pins 17, 17 facing the internal spacing between said brackets 16, 16.

The brackets 16, 16 are fitted with parallel fixed cams 18, 18, which have a curved portion with two recesses 81, 82 formed thereon.

Preferably, the curved portions of each fixed cams 18, 18 form an angle of at least 100° with respect to the axis of the pivot pins 17, 17 and the two pairs of recesses 81, 82 are in such relationship to form an angle of about 85° to 90° with respect to the fixed pivot pins 17, 17.

With reference to the fixed pivot pins 17, 17, the first pair of recesses 81, 81 faces the bottom of the hollow 24, and the second pair of recesses 82, 82 faces the seat.

In the illustrated embodiment, the brackets 16, 16 are generally and/or substantially Ω-shaped.

The fixed pivot pins 17, 17 are preferably made of an antifriction material or support bushes made of an antifriction material (e.g. nylon®).

The platform 4 comprises a support structure 15, typically a U-shaped metal tube, as well as a pair of longitudinal rods and a transversely extending plate.

The U-shaped metal tube ends two plate-like elements 7, 7, which are symmetrical with respect to the plane of symmetry of the platform 4.

The plate-like elements 7, 7 have slots 8, 8 extending along the axes X.

In a possible embodiment, the axis X along which the two slots 8, 8 extend is substantially parallel to the platform 4.

The slots 8, 8 act as guides for a transverse rod 9 (typically a metal bar) whose ends 19, 19 project out of the same slots.

The ends 19, 19 of the rod 9 have such a size as to fit in the recesses 81, 81; 82, 82 of the fixed cams 18, 18.

Bushes of antifriction material may also be mounted to the ends 19, 19 of the transverse rod 9.

The transverse rod 9 can slide along the direction of extension of such slots 8, 8 against the action of elastic return means 10, 10, typically helical springs.

Since the rod 9 is retained by the springs 10, 10, forks or tines 11, 11 may be provided instead of the slots 7, 7.

The plate-like elements 7, 7 further have a generally hook-shaped portion 12, 12 which defines a recess having a curved end portion 13, 13, suitably shaped to receive the fixed pivot pins 17, 17.

The platform 4 is mounted to the backrest 3 in the following manner.

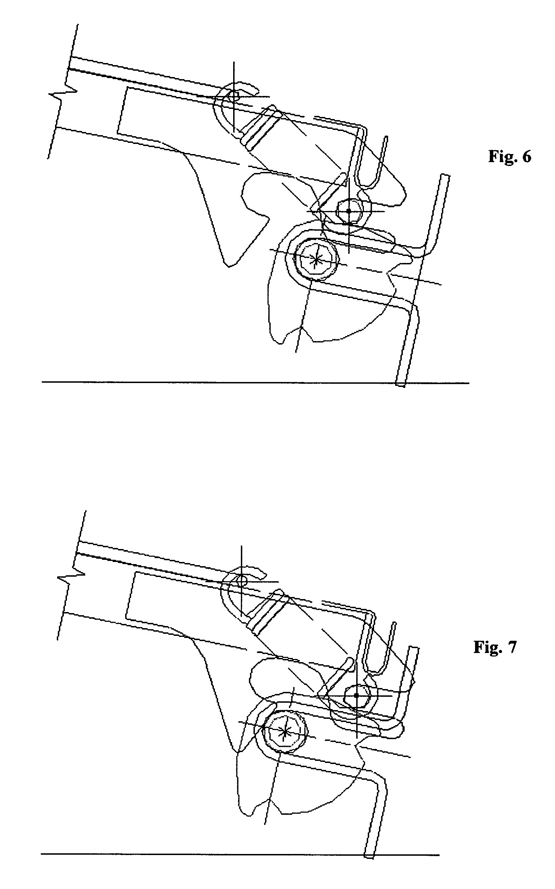

By a translational motion (see Fig. 6 and Fig. 7), the plate-like elements 7, 7 are brought in proximity of the brackets 16, 16.

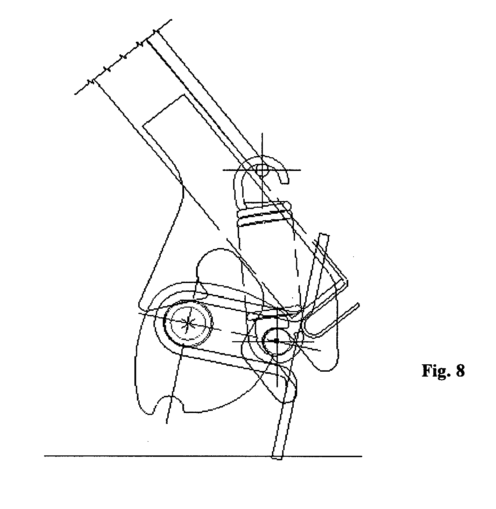

With an upwardly pivotal motion the contour of the cams 18 is followed until the ends 19, 19 of the transverse rod 9 engage the recess 81, 81 of the cams 18, 18 (Fig. 8).

In this condition, the generally hook-shaped portions 12, 12 abut against the fixed pivot pins 17, 17.

Here, the platform acts as a sort of first-class lever, whose fulcrum is the contact point of the contact surface between the hook-shaped portion 12, 12 and the fixed pivot pins 17, 17 and the opposing force is generated by the springs 10, 10 which hold the rod 9 against the support structure 15 of the platform 4.

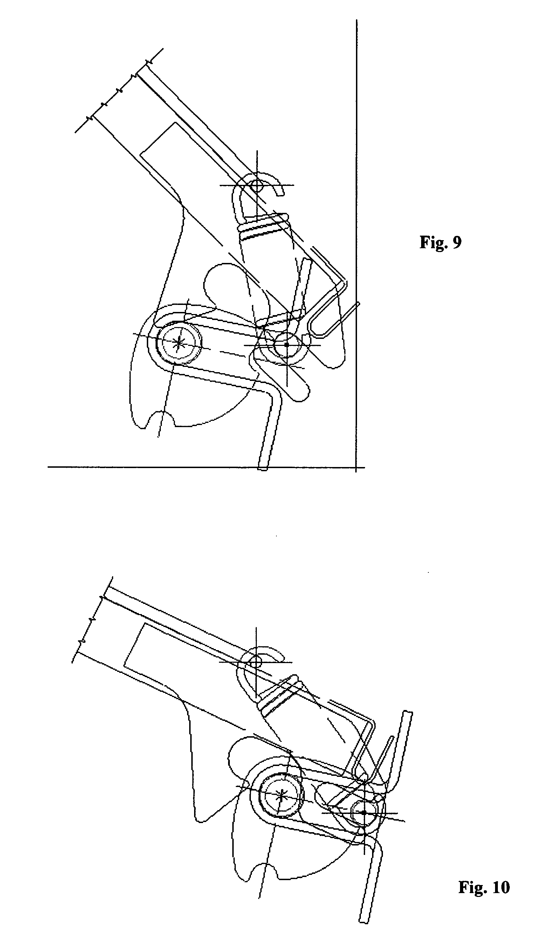

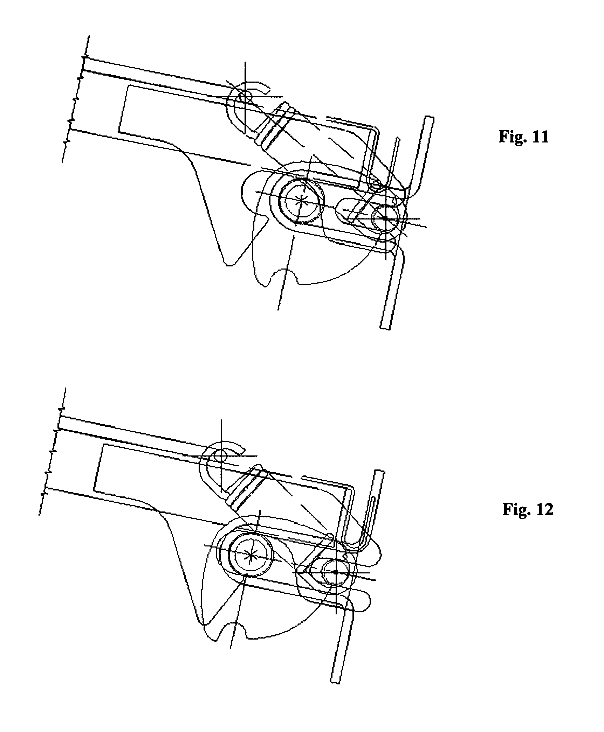

When a downwardly driving force is applied to the platform 4, the springs 10, 10 will be compressed and the platform will be rototranslated (see Fig. 9 and Fig. 10) until the hooks 12, 12 come against the fixed pivot pins 17, 17 (see Fig. 11 and Fig. 12).

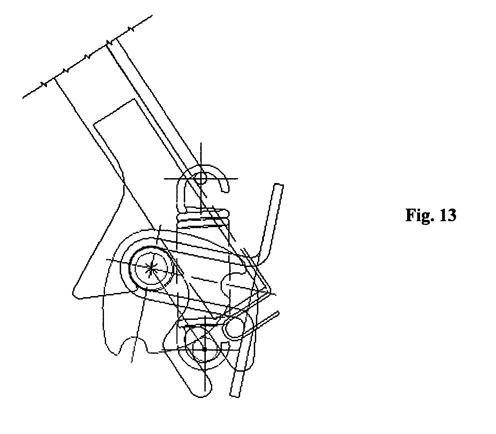

Now, the return force of the springs 10, 10 causes the platform 4 to translate and the fixed pivot pins 17, 17 to hook on to the recesses 13, 13 (Fig. 13).

Thus, the fixed pivot pins 17, 17 and the hooks 12, 12 form a revolute pair.

Therefore the platform 3 may be rotated between two positions, delimited by the recesses 81, 81 and 82, 82 on the fixed cams 18, 18, corresponding to a substantially horizontal orientation and a substantially vertical orientation respectively, with the platform being hidden into the hollow 24 in the latter case.

The user shall simply overcome the initial opposing force of the springs 10, 10 when the ends 19, 19 of the transverse rod 9 engage the first or second recesses 81, 81; 82, 82.

The force opposed by the springs 10, 10 - with the ends 19, 19 of the transverse rod 9 being engaged - is an advantage because it reduces the risk of the platform 4 to be accidentally deployed or folded, particularly in case of impacts or collisions.

## Claims

1. A vehicle seat, comprising a seating surface (2) and a backrest (3), as well as a folding platform (4) attached to the front or rear part (5) of said backrest (3), said platform (4) being movable between a first position, where said platform (4) is received in a hollow (24) formed in said backrest (3), and a second position, where said platform (4) projects out of said hollow (24), said platform (4) comprising a support structure (15) and a pair of members (6, 6) for connecting said support structure (15) to the hollow of said backrest (3), said connecting members (6, 6) being arranged symmetrically with respect to the longitudinal plane of symmetry of the platform (4),
**characterized in that** said pair of connecting members (6, 6) comprises
- two plate-like elements (7, 7) integral with said support structure (15), having a slot (8, 8), with an extension axis (X) and a generally hook-shaped portion (12, 12) which defines a hollow (13, 13);
- a transverse rod (9), which fits in said slots (8, 8) and has ends (19, 19) projecting out of said slots (8, 8), said transverse rod (9) being able to slide along the direction of extension of said slots (8, 8) against the action of elastic return means (10, 10);
- a pair of brackets (16, 16), integral with said backrest (3), which support pivot pins (17, 17) fitting in said hollows (13, 13) and cams (18, 18) which interfere with said ends (19, 19) of said transverse rod (9), said cams having two recesses (81, 82), corresponding to said first and second positions of said platform (4), and adapted to receive said ends (19, 19) of said transverse rod (9).

2. A seat as claimed in claim 1, modified in that said slots (7, 7) are replaced by forks (11, 11).

3. A seat as claimed in claim 1 or 2, wherein a pair of antifriction bushes are mounted to said ends (19, 19) of said transverse rod (9).

4. A seat as claimed in claim 1 or 2 or 3, wherein a pair of antifriction bushes are mounted to said pivot pins (17, 17).

5. A seat as claimed in any preceding claim, wherein said brackets (16, 16) are generally and/or substantially Ω-shaped.

6. A seat as claimed in any preceding claim, wherein said extension axis (X) of said slot or said fork is substantially parallel to said platform (4).

7. A backrest (3) for a vehicle seat, having a hollow (24) in the part designed to act as a support surface for the back of a user, or in the part opposite the one designed to act as a support surface for the back of a user, **characterized in that** a pair of brackets (16, 16) are housed in said hollow (24), in symmetrical arrangement with respect to a longitudinal plane and integral with said backrest (3), and support aligned fixed pivot pins (17, 17) and parallel fixed cams (18, 18), which have a curved portion with two recesses (81, 82) formed thereon.

8. A backrest as claimed in claim 8, wherein said curved portion of said fixed cams (18, 18) forms an angle of at least 100° with respect to the axis of said pivot pins (17, 17) and wherein said two recesses (81, 82) are in such relationship as to form an angle of about 85° to 90° with respect to said pivot pins (17, 17).

9. A backrest as claimed in claim 7 or 8, wherein said brackets (16, 16) are generally and/or substantially Ω-shaped.

10. A backrest as claimed in claim 7 or 8 or 9, wherein antifriction bushes are mounted to said pivot pins (17, 17).

11. A platform (4) for a vehicle seat, comprising a support structure (15), **characterized in that** it comprises:
- two plate-like elements (7, 7) which are arranged symmetrically with respect to the longitudinal plane of symmetry of the platform (4) and are integral with said support structure (15), said plate-like elements (7, 7) having a slot (8, 8) and a generally hook-shaped portion (12, 12) which defines a recess (13, 13);
- a transverse rod (9), which fits in said slots (8, 8) and has ends (19, 19) projecting out of said slots (8, 8), said transverse rod (9) being able to slide along the direction of extension of said slots (8, 8) against the action of elastic return means (10, 10).

12. A platform as claimed in claim 13, wherein said ends (19, 19) of said transverse rod (9) are fitted with antifriction bushes.

13. A platform as claimed in claim 12 or 13, modified in that said slots (7, 7) are replaced by forks (11, 11).
